# EUROPEAN PATENT SPECIFICATION

(11) **EP 3 532 764 B1**
(45) Date of publication and mention of the grant of the patent: **05.05.2021**
(21) Application number: 17787214.0
(22) Date of filing: 26.10.2017
(51) Int. Cl.: F16M 11/08, E21B 1/00, F16M 11/20, F16M 13/00, F16P 3/14, G08B 13/196

(54) **DEVICE AND METHOD FOR MONITORING AN OPERATING AREA**
VORRICHTUNG UND VERFAHREN ZUR ÜBERWACHUNG EINES BETRIEBSBEREICHS
DISPOSITIF ET PROCÉDÉ DE SURVEILLANCE D'UNE ZONE DE FONCTIONNEMENT

(30) Priority: 26.10.2016 IT 201600108172
(43) Date of publication of application: 04.09.2019
(73) Proprietor: Casagrande S.P.A., 33074 Fontanafredda (IT)
(72) Inventor: CASAGRANDE, Mauro, 33077 Sacile (IT); LIANI, Alessandro, 33030 Camino Al Tagliamenmto (IT)
(74) Representative: Petraz, Gilberto Luigi
(86) International application number: PCT/EP2017/077519
(87) International publication number: WO 2018/078054

(56) References cited:
- EP-A2- 1 482 238
- DE-U1-202015 101 170

## Description

### FIELD OF THE INVENTION

The present invention concerns a device and method for monitoring an operating area, that is, an area where work members work, for example drilling members, of an operating machine such as a digging machine or suchlike.

In particular, the present invention allows to monitor the operating area and to recognize the presence and/or the approach of persons and/or objects in that operating area.

The invention preferably, although not exclusively, applies to small and medium size drilling machines, to buckets, borers or milling machines, to machines for anchoring poles, for making wells or diaphragms, or other machines having similar or comparable characteristics.

### BACKGROUND OF THE INVENTION

It is known that drilling machines, or more generally operating machines equipped with work members to hole, break or fragment ground, are equipped with anti-injury safety systems able to prevent accidents and/or injuries due to accidental contact of the operators with the members of the machine.

One safety system used in the state of the art provides to use one or more cords designed to delimit a peripheral area around the work member of the machine and having contact sensors in correspondence with their ends.

When an operator enters the area delimited by such cords, and knocks against them, the sensors detect this contact and the work member is quickly stopped, so as to prevent any accidents for the operator.

Although valid in theory, this system has proved rather inadequate in practice, since every time the operator has to access, even when the machine is stopped, the area around the drilling member, he/she can accidentally bump into the cords, resulting in considerable loss of time and operating inconvenience.

Other known safety systems provide to use protective cages which prevent access to the mobile parts of the machine, and in particular to the drilling member. To access the work member, it is necessary to open the cages, and opening the cages causes the drilling member to stop, so as to prevent any accidents.

The cages are expensive, cumbersome and heavy, and also do not allow to reach the desired drilling points, especially when these points are near a wall or other fixed obstacle.

The cages also have to be sized according to the machine's operating mode, so that, while in the case of a vertical working direction the cages can have a limited extension, in the case of a horizontal working direction they must extend along the entire length of the support rod of the work member, with a consequent increase in overall weight and bulk.

Since interventions on the work members, for example to insert new poles or rods, or to change and/or maintain the tool, can also be very frequent over the course of a day, operators normally remove the cords or cages at the start of work, thus depriving the machine of its safety system.

This entails considerable risks to the safety of the operators themselves, as well as a failure to comply with regulations that can be penalized in the event of controls.

Other known systems for monitoring the operating areas provide to use radio waves, which can detect the presence of sensors, or recognition chips worn by the work personnel.

However, this solution too is not very efficient and, in order to obtain effective monitoring, it is also necessary for anyone entering the work site to be provided with a suitable sensor or chip.

Other known solutions provide to use a fixed camera, mounted on the machine, or possibly on the support rod, also referred to as the "mast", which monitors the area surrounding the work member.

However, the use of fixed cameras does not allow an effective monitoring of operating areas, especially if the operating machine has to work near a wall or an obstacle, which prevent the camera from displaying a sufficiently large area. Furthermore, if the camera protrudes beyond the bulk of the work member, it prevents it from working near a wall, or other fixed obstacle, since it does not allow the work member to be positioned correctly.

Solutions that provide to use cameras and display devices to monitor an operating zone of a drilling device are known, for example, from documents EP-A-1 482 238 and DE-U-20 2015 101 170.

Document EP-A-1 482 238, in the name of the present Applicant, concerns a device and method to recognize the presence and/or approach of persons or voluminous objects inside an operating zone of the operating machine. The solution described provides to use two digital display means disposed in such a way as to display a determinate area around the operating zone of a boring member of a drilling machine.

In EP-A-1 482 238 the display means are mounted in a fixed positon, and therefore in order to modify the area displayed, for example as the digging operations proceed, an operator first has to disassemble and then reassemble manually, when and if this is possible, the display means in the most suitable position so as not to risk their field of vision from being obstructed and/or limited and therefore prevent dangerous conditions from being generated.

The solution described in DE-U-20 2015 101 170 concerns a drilling apparatus provided with a monitoring sensor, for example a video camera or a 3D sensor, attached to the mast or to an arm which is in turn attached to the mast and protruding cantilevered from the latter. The monitoring sensor is fixed and it is not envisaged that it can be disposed in different positions to modify the area to be monitored.

Known solutions can therefore be not very efficient if, for example, the work member has to work in proximity to a wall of a building, or trees or other obstacles, either fixed or also moving.

There is therefore a need to perfect and make available a monitoring device, and a connected method, for monitoring an operating area, which overcome at least one of the disadvantages of the state of the art.

One purpose of the present invention is to obtain a monitoring device for an operating area to be applied to excavation machines, or suchlike, which ensures a high level of safety, does not entail any obstacles to the work of the staff, and does not involve any particular operating problems.

Another purpose of the invention is to obtain a monitoring device that is simple to install and can be adopted, substantially without any limitations, on any type and size of operating machine, both at the production stage and on already existing operating machines.

Another purpose of the invention is to obtain a monitoring device and a connected monitoring method, which allow to vary the area to be monitored on each occasion according to the operating conditions of the operating machine.

Another purpose of the present invention is to obtain a monitoring device for an operating machine that allows to position, on each occasion, the optical recording unit in relation to the position of possible obstacles, fixed and/or moving, present in the operating area, in order to optimize the operating area monitored and prevent limitation to the field of vision.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

According to the above purposes, the present invention concerns a monitoring device of an operating area, in which a work member of an operating machine operates.

According to the present invention, the monitoring device comprises at least an optical recording unit suitable to acquire images of the operating area and a management unit configured to receive and process the images and to send a command signal to the work member, when an obstacle is detected in the operating area

According to the present invention, the monitoring device comprises a positioning member, selectively drivable by means of commands from the management unit, to position the optical recording unit in relation to the position of the work member during the operating cycle and to the possible presence of one or more fixed and/or moving obstacles in the operating area, so as to increase the monitored area excluding zones that do not need, at that moment, to be monitored.

In other words, the positioning member can be selectively activated by the management unit when it is detected that an external obstacle, for example a branch, a wall, a billboard or other, also moving, or an obstacle which forms part of the machine, enters into the field of vision of the optical recording unit, limiting said field of vision and hence creating potentially dangerous conditions, to move the optical recording unit, modifying its position, so as to restore an optimum field of vision.

More particularly, the management unit can command the activation of the positioning member so as to move and/or orientate the optical recording unit in order to modify the area to be monitored based on the images acquired, so as to optimize the display and/or to modify, continuously or at intervals, the field of vision of the zone around the work member as a function of possible obstacles, fixed and/or moving, present therein.

According to possible variants, the monitoring device comprises two optical recording units cooperating with each other to define a three-dimensional image of the common operating area.

According to possible embodiments, the optical recording unit comprises at least an infrared sensor able to acquire images even when there is no light, or in conditions of low visibility.

According to other formulations, the present invention also concerns a monitoring method that provides to modify the position of the optical recording unit in relation to the position of the work member and to the possible presence of one or more obstacles, fixed and/or moving, so as to increase the effective monitored operating area.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a lateral schematic view of an excavating machine in a vertical configuration, equipped with a monitoring device according to embodiments described here;
- figs. 2 and 3 are two schematic views from above of fig. 1 with the optical recording means disposed in two positions, where the areas to be monitored are highlighted;

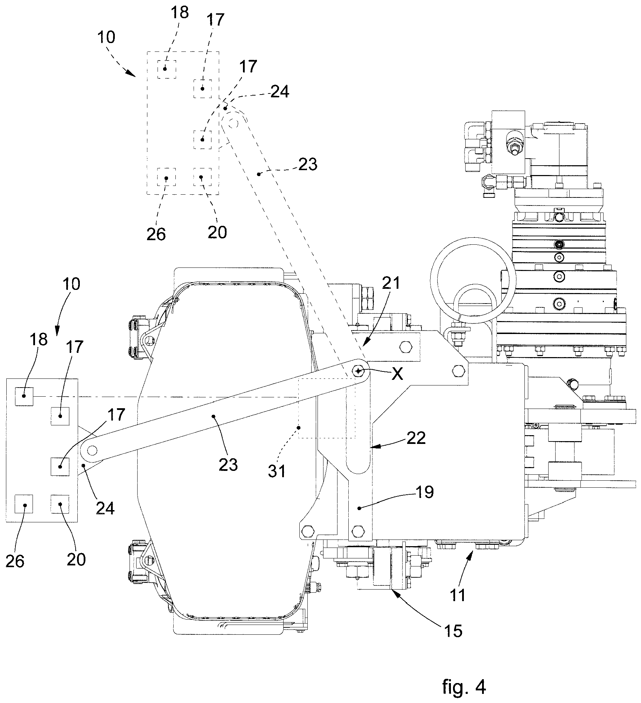

- fig. 4 is a schematic view from above of fig. 1 with the optical recording means disposed in two positions;

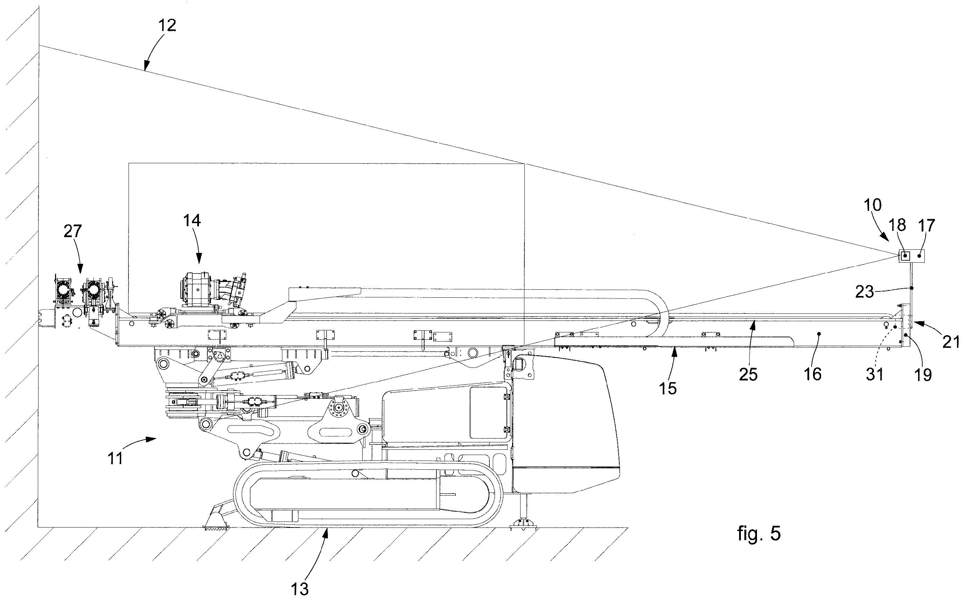

- fig. 5 is a lateral schematic view of an operating machine in a horizontal configuration, equipped with a monitoring device according to embodiments described here.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

Embodiments described here concern a monitoring device 10 of an operating area 12 of an operating machine 11, such as for example buckets, borers or milling machines, excavating machines, machines for anchoring poles, for making wells or diaphragms, and suchlike.

According to possible embodiments, the operating machine 11 can comprise a mobile assembly 13 in order to move it, a work member 14 able to perform one or more specific operations, such as for example drilling or other, and support and movement members 15 able to support and move the work member 14.

For example, if the operating machine 11 is a digging machine, the movement unit 13 can comprise a tracked slider, or other similar movement unit, and the work member 14 can comprise a drilling member.

The support and movement members 15 can comprise a support rod 16, also known as the "mast", with which the work member 14 can be associated.

Gripping devices 27 can also be associated with the support rod 16, and are configured to retain any work tools connected to the work member 14, for example pipes, or drilling rods, to allow replacement or modification thereof.

According to some embodiments, the monitoring device 10 can comprise:
- at least one optical recording unit 17 able to acquire images of an operating area 12 surrounding the work member 14 of the operating machine 11;
- a management unit 18 configured to receive and process the images acquired by the optical recording unit 17, and to send a command signal to the work member 14 when a shape is detected in the operating area 12.

According to possible embodiments, the optical recording unit 17 comprises, for example, one or more cameras configured to film at least the images of the area subtended by its visual beam.

According to some embodiments, the optical recording unit 17 is configured to be positioned so that its visual beam affects an operating area 12 surrounding the work member 14 of a desired size, according to the specific safety requirements on each occasion present in the various work configurations of the operating machine 11.

The optical recording unit 17 is preferably inserted into a metal container, not shown, advantageously of a very resistant type, to prevent splinters or debris from hitting and damaging the optical recording unit 17, and in any case to preserve it from mechanical stresses or atmospheric conditions adverse to its functioning.

The container is also advantageously equipped with an internal thermal conditioning circuit in order to ensure its efficient operation even in particularly severe weather conditions.

According to possible embodiments, the optical recording unit 17 is positioned above the support and movement members 15 and is installed on a support 19. Advantageously, the optical recording unit 17 is installed on a support 19 of the anti-vibration type.

According to possible embodiments, which can be combined with other embodiments, the optical recording unit 17 can comprise at least one infrared sensor able to acquire images even in the absence of illumination, or in conditions of poor visibility.

According to some embodiments, the monitoring device 10 can comprise two optical recording units 17 cooperating with each other to define a three-dimensional image of the operating area 12 common to the two optical recording units 17.

Three-dimensional images allow to obtain more information than two-dimensional images and, in particular, allow to eliminate false positives due to shadows, and to consider only three-dimensional bodies, thus improving the recognition of objects or persons entering the operating area 12.

This configuration also allows to monitor a three-dimensional operating area 12, or to acquire a third dimension in height of the objects and/or shapes in the operating area 12, so as to increase safety in the whole space subtended by the visual beams.

According to possible solutions, the management unit 18 can be integrated with the optical recording unit 17, for example by means of a microprocessor-type electronic board or other similar board.

It comes within the scope of the invention that the optical recording unit 17 cooperates with a management unit 18 installed on board the machine, or even on the ground, to send a command signal to the work member 14 if an obstacle, or a shape is detected in the operating area 12.

According to some embodiments, the optical recording unit 17 can also cooperate, directly or by means of the management unit 18, with a user interface 28, to make the display of the operating area 12 monitored available to an operator.

The command signal can be, for example, a command to stop/drive the work member 14.

According to possible embodiments, not shown, the monitoring device 10 can comprise signaling means to signal an alert condition or condition of imminent danger if the management unit 18 recognizes a shape in the operating area 12.

According to some embodiments, the optical recording unit 17 and the management unit 18 can be connected by cable, or they can communicate in wireless mode.

According to some embodiments, the management unit 18 can be programmed to deactivate or slow down the action of the work member 14, if the optical recording unit 17 detects a person and/or object with at least a defined volume, in a first outer zone 12a, and delimited by a defined boundary, of the operating area 12 to be monitored.

In such situations, moreover, the management unit 18 can emit an acoustic and/or visual alarm signal.

According to possible solutions, the management unit 18 allows to recognize the presence of human shapes or objects in motion, having a volume greater than a defined threshold value, in order to interrupt or otherwise condition the functioning of the operating machine 11 in case of actual danger.

This allows to not stop or slow the machine when certain objects or materials are in the operating area 12 monitored by the optical recording unit 17, for example debris, stones, mud, rain, snow, trees, walls or others.

If the processing of the images identifies the presence of a person or an object with a defined volume inside a second zone 12b of the operating area 12, more internal and closer to the work member 14, the management unit 18 can be programmed to instantly block the action of the work member 14 in order to prevent accidents.

According to some embodiments, the management unit 18 is provided with software that can discriminate whether inside the operating area 12 to be monitored, in one of the zones 12a or 12b, the shape of a person is recognized, thus determining an intervention on the commands of the work member 14, or another type of object or other material, for example dust, rain or snow, which does not cause any intervention on the work member 14.

According to other embodiments, there can be three or more differentiated zones inside the operating area 12, with different and varying degrees of intervention on the command system of the operating machine 11.

According to other embodiments, the management unit 18 can comprise a memory unit 20 configured to memorize diversified operating areas 12 to be monitored depending on the type of work member 14 in use, on the position of the optical recording unit 17, the type and/or size of the operating machine 11.

The memory unit 20 can also be configured to memorize the images recorded, and possibly transmit them remotely in real time.

In the event that an alarm signal is generated, or a slowdown occurs, or a stoppage of the work members 14 caused by the intervention of the management unit 18, the memory unit 20 can memorize the images before and after these events.

This allows to reproduce the images at a later time, so as to verify what actually happened in operating area 12 in the event of accidents.

According to one aspect of the present invention, the monitoring device 10 also comprises a positioning member 21, able to be selectively activated by the management unit 18, and able to position the optical recording unit 17 both in relation to the position of the work member 14, during its operating cycle, and also in relation to the possible presence of one or more obstacles, fixed or also moving, in the operating area 12, so as to modify the boundary of the operating area 12 monitored as a function of the detected presence of said obstacles.

This allows to move, position and/or orient the optical recording unit 17 in various positions around the work member 14, so as to guarantee the constant monitoring of an appropriate operating area 12, optimizing the operating area 12 by minimizing the framing of fixed obstacles, such as for example walls or other objects, which make it highly unlikely or impossible for shapes to pass in the operating area 12.

The obstacles can comprise both external obstacles, such as a branch, a wall, a billboard or other, also moving, or internal obstacles, such as components of the operating machine 11, for example the work member 14, or work tools connected to it, for example pipes, or drilling rods. For example, it could be provided to move the optical recording unit 17 in order to modify the operating area 12 when the work member 14 is substituted with another one having different sizes.

According to some embodiments, the management unit 18 can be configured to condition the functioning of the positioning member 21 and hence the position of the optical recording unit 17 as a function of the images acquired by the optical recording unit 17.

In other embodiments, the position of the optical recording unit 17 is modified during the work cycle according to data pre-set in the management unit 18.

According to these embodiments, the positioning member 21 can be provided with drive members 31, selectively commandable by the management unit 18.

The drive member 31 can consist of an electric motor, a hydraulic or pneumatic motor, an actuator or any other mean suitable to move the positioning member 21 according to the commands received from the management unit 18.

In this way the management unit 18 can condition the position of the optical recording unit 17 by moving the positioning member 21, for example, if the management unit 18 detects the presence of obstacles, or if the operating area 12 displayed is less than a minimum established size of the operating area 12.

The monitoring device 10 according to the invention therefore allows to position the optical recording unit 17 in position, and with the best orientation, as a function of the fixed obstacles present in the area around the operating area 12.

According to variant embodiments, the positioning member 21 can be moved directly by the management unit 18, based on the images acquired by the optical recording unit 17 and processed.

For example, the management unit 18 can identify the presence of fixed obstacles in an operating area, calculate the size of the operating area displayed, and possibly determine whether it is necessary to move the optical recording unit 17, and in which direction.

According to some embodiments, the management unit 18 can determine whether and how to move the positioning member 21 according to parameters and constraints set and memorized in the management unit 18 itself, or in the memory unit 20.

In this way the monitoring device 10 can be able to automatically self-adapt, and to adjust on each occasion the position of the positioning member 21 and hence of the optical recording unit 17 in order to optimize the display of the operating area 12.

According to other variant embodiments, the positioning member 21 can be moved by the management unit 18 according to commands supplied by an operator, for example by means of the user interface 28 that is operatively connected to the management unit 18, after having displayed any possible interference in the field of vision of the optical recording unit 17.

According to other variant embodiments, the positioning member 21 can comprise a lateral movement unit configured to move the optical recording unit 17 along a path defined by a guide 22 provided on the support and movement members 15, that is, on the support rod 16 of the operating machine 11.

According to possible embodiments, the positioning member 21 can comprise a mobile arm 23, drivable by the drive member 31 connected to the support and movement members 15 and configured to position the optical recording unit 17 in different positions with respect to the work member.

According to possible embodiments, the mobile arm 23 is rotatably connected to the support rod 16 and is configured to rotate around an axis of rotation X, aligned with or parallel to the longitudinal axis of the work member 14.

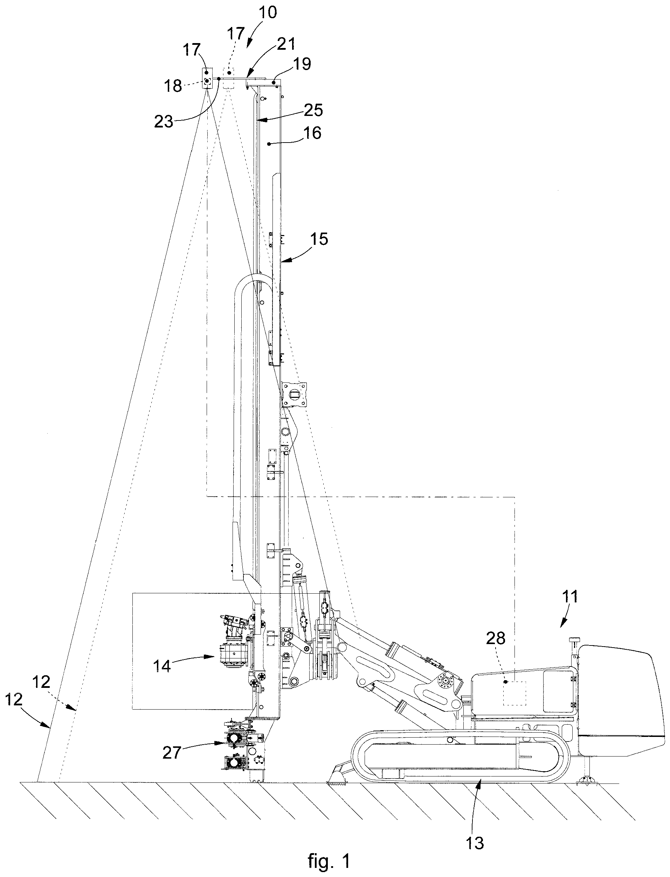

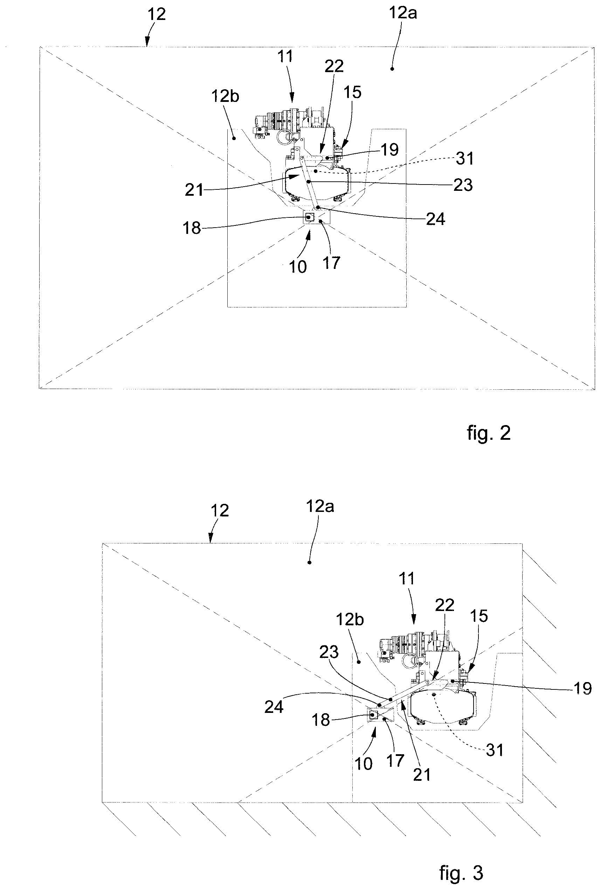

According to some embodiments, the mobile arm 23 can be made to rotate between a front position, where the optical recording unit 17 is located above the work member 14 and frames an operating area 12 substantially symmetrical with respect to the position of the work member 14 (see fig. 1), and at least one lateral position, where the optical recording unit 17 is located laterally with respect to the position of the work member 14 (see fig. 3).

According to some embodiments, the mobile arm 23 can have a fixed length that allows the movement of the optical recording unit 17 along a circumferential portion.

According to possible variant embodiments, the mobile arm 23 can have a variable length, for example it can comprise two or more segments telescopically inserted into each other, or that can be folded adjacent to each other.

According to other variants, the end of the mobile arm 23 connected to the optical recording unit 17 can comprise a rotary joint 24 configured to modify the orientation of the optical recording unit 17 with respect to the mobile arm 23.

According to some embodiments, when the operating machine 11 is adjacent to a lateral and/or front wall or to a fixed obstacle, the optical recording unit 17 is positioned in a lateral position with respect to the work member 14, for example opposite the zone where there is the wall or the fixed obstacle, so as to monitor an accessible operating area 12 that is larger than the one that can be monitored, by positioning the optical recording unit 17 above the operating member 14.

According to a variant embodiment, by positioning the optical recording unit 17 in a lateral position and orienting it towards the operating machine 11 it is possible to view the conditions of the components of the operating machine 11 itself. This also allows to view components that are not easily accessible under conditions of use.

The possibility of moving the optical recording unit 17 from the front position to the lateral position makes the operating machine 11 more versatile, so the optical recording unit 17 can also be used near a wall or other obstacle which extends vertically, while continuing to record the operating area 12 to be monitored.

For example, as can be seen in figs. 2 and 3, if there are no fixed obstacles located in front of the work member 14, the optical recording unit 17 can be positioned in the front position (fig. 2), while if there are fixed obstacles such as a wall, a tree, or other elements with a vertical extension, also located laterally, the optical recording unit 17 can be positioned in a lateral position opposite that occupied by the fixed obstacle (fig. 3).

According to possible variant embodiments, the positioning member 21 can also comprise a longitudinal mobile member 25 configured to position the optical recording unit 17 in the longitudinal direction, for example with respect to the support rod 16, moving it nearer to/away from the work member 14.

According to possible embodiments, not shown, the longitudinal mobile member 25 can comprise guide elements, which can be associated with the support and movement members 15, and sliding elements, which can be associated with the optical recording unit 17 and suitable to slide in the guide elements.

According to other embodiments, the optical recording unit 17 can comprise or be associated with a detection unit 26, configured to detect the position and/or orientation in space of the optical recording unit 17.

For example, the detection unit 26 can comprise an accelerometer able to recognize the orientation of the optical recording unit 17 with respect to a reference system of coordinates, that is, whether it is oriented in a vertical, horizontal or inclined direction with respect to them.

According to possible variant embodiments, the monitoring device 10 can also comprise another detection unit 26 associated with the support rod 16.

In this way, if the optical recording unit 17 is removed from the operating machine 11 or in any case distanced from the support rod 16 by a distance greater than a predetermined threshold value, an alarm signal can be generated.

According to other variant embodiments, depending on the position of the optical recording unit 17 detected by the detection unit 26 and on the operating conditions, the management unit 18 can select on each occasion the specific operating area 12 which has to be monitored, and/or the display mode thereof.

According to particular solutions, the management unit 18 can be configured to identify persons or voluminous objects, recognizing them from above if the position of the optical recording unit 17 is vertical, or recognizing them by identifying them from the lateral shape if the position of the optical recording unit 17 is horizontal, thus operating on different dimensions.

According to other embodiments, it can be provided that the management unit 18, depending on the real-time images acquired, can recognize whether the operating area 12 is correctly displayed and, if necessary, can act on the positioning member 21 to move the optical recording unit 17 to the position that allows optimum viewing of the operating area 12 to be monitored.

Embodiments described here also concern a method for monitoring an operating area 12 of an operating machine 11.

According to possible embodiments, the monitoring method provides to:
- acquire images of the operating area 12 with at least one optical recording unit 17;
- process the images to detect the possible presence of at least a fixed, or moving obstacle, or shape, in the operating area 12, and to command the work member 14 if an obstacle, or shape, is detected in the operating area 12.

According to one aspect of the present invention, the monitoring method provides to position the optical recording unit 17 in relation to the position of the work member 14 and the possible presence of one or more fixed obstacles in the operating area 12, so as to increase the operating area 12 monitored.

The monitoring method also provides to recognize a shape in the operating area 12 and, if necessary, to verify whether said shape has a size greater than a predetermined threshold value.

According to some embodiments, the monitoring method also provides to verify whether the shape is stationary or moving, and to verify the direction in which it is moving.

According to other variant embodiments, the monitoring method can provide to verify whether the shape is moving inside specific zones of the operating area 12.

According to other variant embodiments, the monitoring method can provide to detect the position and/or orientation of the optical recording unit 17 by means of a detection unit 26.

One of the advantages of the present invention is that the operating area 12 around the work member 14 is substantially free, so that when the operating machine 11 is stopped, it is completely accessible to operators for any type of operation or intervention.

Another advantage is that the monitoring device 10 can be installed, without particular limitations, substantially on any operating machine 11 without performing complicated assembly and/or positioning operations.

An additional advantage of the present invention is that it allows to totally customize the intervention parameters of the system, both in terms of the operating area 12 monitored and also in terms of selecting the discriminating parameters that activate or not the intervention on the operating machine 11.

It is clear that modifications and/or additions of parts can be made to the monitoring device and connected method as described heretofore, without departing from the field and scope of the present invention.

It is also clear that, although the present invention has been described with reference to some specific examples, a person of skill in the art shall certainly be able to achieve many other equivalent forms of monitoring device and connected method, having the characteristics as set forth in the claims and hence all coming within the field of protection defined thereby.

## Claims

1. Device to monitor an operating area (12) of an operating machine (11) provided with a work member (14) and support and movement means (15) of said work member (14), said monitoring device comprising:
- at least an optical recording unit (17) able to acquire images of said operating area (12) surrounding said work member (14),
- a management unit (18) configured to receive and process said images acquired by said optical recording unit (17), in order to identify possible fixed and/or moving obstacles, and to send a command signal to said work member (14), when said obstacle is detected in said operating area (12), and
- a positioning member (21) able to position said optical recording unit (17) said monitoring device being **characterized in that** said positioning member (21) is provided with drive members (3) selectively drivable by said management unit (18) and is able to be selectively activated, by commands from said management unit (18), to position said optical recording unit (17) in relation to the position of said work member (14) during the operating cycle and in relation to the possible presence of one or more fixed and/or moving obstacles in said operating area (12).

2. Monitoring device as in claim 1, **characterized in that** said positioning member (21) comprises a mobile arm (23) drivable by the drive member (31), connected to said support and movement members (15) and configured to position said optical recording unit (17) between a front position, in which said optical recording unit (17) is located above said work member (14), and at least a lateral position, in which said optical recording unit (17) is located laterally with respect to the position of said work member (14).

3. Monitoring device as in claim 2, **characterized in that** said mobile arm (23) is rotatingly connected to a support rod (16) and is configured to be made to rotate around an axis of rotation (X) aligned, or parallel, with a longitudinal axis of said work member (14), said support rod (16) being comprised in said support and movement members (15).

4. Monitoring device as in claim 2 or 3, **characterized in that** said mobile arm (23) has a variable length.

5. Monitoring device as in any of the claims from 2 to 4, **characterized in that** one end of said mobile arm (23) connected to said optical recording unit (17) comprises a rotating joint (24) configured to modify the orientation of said optical recording unit (17) with respect to said mobile arm (23).

6. Monitoring device as in any claim hereinbefore, **characterized in that** said positioning member (21) comprises a lateral movement unit configured to move said optical recording unit (17) along a path defined by a guide (22) provided on said support and movement members (15).

7. Monitoring device as in any claim hereinbefore, **characterized in that** it comprises two optical recording units (17) cooperating with each other to define a three-dimensional image of said operating area (12) common to said two optical recording units (17).

8. Monitoring device as in any claim hereinbefore, **characterized in that** said optical recording unit (17) comprises at least an infrared sensor able to acquire said images even when there is no light, or in conditions of low visibility.

9. Monitoring device as in any claim hereinbefore, **characterized in that** said optical recording unit (17) comprises or is associated with a detection unit (26) configured to detect the position and/or orientation in space of said optical recording unit (17) and communicating with said management unit (18).

10. Method to monitor an operating area (12) of an operating machine (11) provided with a work member (14), which provides to:
- acquire images of said operating area (12) with at least one optical recording unit (17),
- process said images to identify the possible presence of possible fixed and/or moving obstacles in said operating area (12) by means of a management unit (18), and to command said work member (14) if there is an obstacle detected in said operating area (12), and
**characterized in that** it also provides to selectively activate a positioning member (21) able to position said optical recording unit (17) by means of a command from the management unit (18) and move said positioning member (21) by means of drive members (31) drivable by said management unit (18) to modify the position of said optical recording unit (17) in relation to the position of said work member (14) and to the possible presence of one or more fixed and/or moving obstacles identified in said operating area (12), so as to optimize the display of said operating area (12) monitored.

11. Monitoring method as in claim 10, **characterized in that** it provides to move said positioning member (21) automatically, as a function of commands supplied by said management unit (18) based on the processing of said images acquired.

12. Monitoring method as in claim 11, **characterized in that** it provides to move said positioning member (21) as a function of commands supplied by an operator by means of a user interface (28) operatively connected to said management unit (18).

## Patentansprüche

1. Vorrichtung zum Überwachen eines Betriebsbereichs (12) einer Betriebsmaschine (11), welche mit einem Arbeitselement (14) sowie Stütz- und Bewegungselementen (15) des besagten Arbeitselements (14) bereitgestellt ist, wobei besagte Überwachungsvorrichtung aufweist:
- wenigstens eine optische Aufnahmeeinheit (17), welche dazu geeignet ist, Bilder von besagtem Betriebsbereich (12), welcher das besagte Arbeitselement (14) umgibt, zu erfassen,
- eine Steuerungseinheit (18), welche konfiguriert ist, um besagte mittels besagter optischer Aufnahmeeinheit (17) erfasste Bilder zu empfangen und zu verarbeiten, um mögliche fixierte und/oder bewegliche Hindernisse zu identifizieren, und ein Steuersignal an besagtes Arbeitselement (14) zu senden, wenn besagtes Hindernis in besagtem Betriebsbereich (12) detektiert wird, und
- ein Positionierungselement (21), welches dazu geeignet ist, besagte optische Aufnahmeeinheit (17) zu positionieren,
wobei besagte Überwachungsvorrichtung **dadurch gekennzeichnet ist, dass** besagtes Positionierungselement (21) mit Antriebselementen (3) bereitgestellt ist, welche mittels besagter Steuerungseinheit (18) selektiv antreibbar sind, und dazu geeignet ist, selektiv mittels Befehlen von besagter Steuerungseinheit (18) aktiviert zu werden, um besagte optische Aufnahmeeinheit (17) in Bezug auf die Position von besagtem Arbeitselement (14) während des Betriebszyklus und in Bezug auf die mögliche Anwesenheit eines oder mehrerer fixierter und/oder beweglicher Hindernisse in besagtem Betriebsbereich (12) zu positionieren.

2. Überwachungsvorrichtung gemäß Anspruch 1, **dadurch gekennzeichnet, dass** besagtes Positionierungselement (21) einen mobilen Arm (23) aufweist, der mittels des Antriebselements (31) antreibbar ist, welcher mit besagten Stütz- und Bewegungselementen (15) verbunden ist und konfiguriert ist, um besagte optische Aufnahmeeinheit (17) zu positionieren zwischen einer vorderen Position, in welcher besagte optische Aufnahmeeinheit (17) über besagtem Arbeitselement (14) angeordnet ist, und wenigstens einer seitlichen Position, in welcher besagte optische Aufnahmeeinheit (17) seitlich in Bezug auf die Position von besagtem Arbeitselement (14) angeordnet ist.

3. Überwachungsvorrichtung gemäß Anspruch 2, **dadurch gekennzeichnet, dass** besagter mobiler Arm (23) mit einer Stützstange (16) drehbar verbunden ist und konfiguriert ist, um eine Rotationsachse (X) rotiert zu werden, die entlang einer, oder parallel zu, einer longitudinalen Achse von besagtem Arbeitselement (14) ausgerichtet ist, wobei besagte Stützstange (16) in besagten Stütz- und Bewegungselementen (15) enthalten ist.

4. Überwachungsvorrichtung gemäß Anspruch 2 oder 3, **dadurch gekennzeichnet, dass** besagter mobiler Arm (23) eine variable Länge hat.

5. Überwachungsvorrichtung gemäß irgendeinem der Ansprüche 2 bis 4, **dadurch gekennzeichnet, dass** ein Ende von besagtem mobilem Arm (23), das mit besagter optischer Aufnahmeeinheit (17) verbunden ist, ein Rotationsgelenk (24) aufweist, welches konfiguriert ist, um die Orientierung von besagter optischer Aufnahmeeinheit (17) in Bezug auf besagten mobilen Arm (23) zu modifizieren.

6. Überwachungsvorrichtung gemäß irgendeinem der vorangegangenen Ansprüche, **dadurch gekennzeichnet, dass** besagtes Positionierungselement (21) eine Seitliche-Bewegung-Einheit aufweist, die konfiguriert ist, um besagte optische Aufnahmeeinheit (17) entlang eines Pfads zu bewegen, der mittels einer Führung (22) definiert ist, die an besagten Stütz- und Bewegungselementen (15) bereitgestellt ist.

7. Überwachungsvorrichtung gemäß irgendeinem der vorangegangenen Ansprüche, **dadurch gekennzeichnet, dass** sie zwei optische Aufnahmeeinheiten (17) aufweist, welche miteinander kooperieren, um ein dreidimensionales Bild von besagtem Betriebsbereich (12) zu definieren, der besagten zwei optischen Aufnahmeeinheiten (17) gemeinsam ist.

8. Überwachungsvorrichtung gemäß irgendeinem der vorangegangenen Ansprüche, **dadurch gekennzeichnet, dass** besagte optische Aufnahmeeinheit (17) wenigstens einen Infrarot-Sensor aufweist, der dazu geeignet ist, besagte Bilder, selbst wenn es kein Licht gibt oder unter Bedingungen mit geringer Sichtweite, zu erfassen.

9. Überwachungsvorrichtung gemäß irgendeinem der vorangegangenen Ansprüche, **dadurch gekennzeichnet, dass** besagte optische Aufnahmeeinheit (17) eine Detektionseinheit (26) aufweist oder einer solchen zugeordnet ist, welche konfiguriert ist, um die Position und/oder Orientierung im Raum von besagter optischer Aufnahmeeinheit (17) zu detektieren, und mit besagter Steuerungseinheit (18) kommuniziert.

10. Verfahren zum Überwachen eines Betriebsbereichs (12) einer Betriebsmaschine (11), welche mit einem Arbeitselement (14) bereitgestellt ist, welches vorsieht:
- Erfassen von Bildern von besagtem Betriebsbereich (12) mit wenigstens einer optischen Aufnahmeeinheit (17),
- Verarbeiten von besagten Bildern, um die mögliche Anwesenheit von möglichen fixierten und/oder beweglichen Hindernissen in besagtem Betriebsbereich (12) mittels einer Steuerungseinheit (18) zu identifizieren und besagtes Arbeitselement (14) zu steuern, wenn es ein in besagtem Betriebsbereich (12) detektiertes Hindernis gibt, und
**dadurch gekennzeichnet, dass** es auch vorsieht, selektiv ein Positionierungselement (21) zu aktivieren, welches dazu geeignet ist, besagte optische Aufnahmeeinheit (17) mittels eines Befehls von der Steuerungseinheit (18) zu positionieren und besagtes Positionierungselement (21) mittels Antriebselementen (31) zu bewegen, welche mittels besagter Steuerungseinheit (18) antreibbar sind, um die Position von besagter optischer Aufnahmeeinheit (17) in Bezug auf die Position von besagtem Arbeitselement (14) und auf die mögliche Anwesenheit von einem oder mehreren fixierten und/oder beweglichen Hindernissen, die in besagtem Betriebsbereich (12) identifiziert sind, zu modifizieren, um die Anzeige von besagtem überprüftem Betriebsbereich (12) zu optimieren.

11. Überwachungsverfahren gemäß Anspruch 10, **dadurch gekennzeichnet, dass** es vorsieht, besagtes Positionierungselement (21) automatisch zu bewegen, als eine Funktion von Befehlen, die mittels besagter Steuerungseinheit (18) bereitgestellt werden, basierend auf der Verarbeitung von besagten erfassten Bildern.

12. Überwachungsverfahren gemäß Anspruch 11, **dadurch gekennzeichnet, dass** es vorsieht, besagtes Positionierungselement (21) zu bewegen, als eine Funktion von Befehlen, die mittels eines Bedieners mittels einer Benutzerschnittstelle (28) bereitgestellt werden, welche mit besagter Steuerungseinheit (18) wirkverbunden ist.

## Revendications

1. Dispositif de surveillance d'une zone d'exploitation (12) d'une machine d'exploitation (11) pourvue d'un élément de travail (14) et de moyens de support et de déplacement (15) dudit élément de travail (14), ledit dispositif de surveillance comprenant :
- au moins une unité d'enregistrement optique (17) apte à acquérir des images de ladite zone d'exploitation (12) entourant ledit élément de travail (14),
- une unité de gestion (18) conçue pour recevoir et traiter lesdites images acquises par ladite unité d'enregistrement optique (17), afin d'identifier d'éventuels obstacles fixes et/ou mobiles, et pour envoyer un signal d'instruction audit élément de travail (14), lorsque ledit obstacle est détecté dans ladite zone d'exploitation (12), et
- un élément de positionnement (21) apte à positionner ladite unité d'enregistrement optique (17), ledit dispositif de surveillance étant **caractérisé en ce que** ledit élément de positionnement (21) est pourvu d'éléments d'entraînement (3) pouvant être entraînés sélectivement par ladite unité de gestion (18) et est capable à être sélectivement activée, par des instructions de ladite unité de gestion (18), pour positionner ladite unité d'enregistrement optique (17) par rapport à la position dudit élément de travail (14) pendant le cycle d'exploitation et par rapport à la présence éventuelle d'un ou plus d'obstacles fixes et/ou mobiles dans ladite zone d'exploitation (12).

2. Dispositif de surveillance selon la revendication 1, **caractérisé en ce que** ledit élément de positionnement (21) comprend un bras mobile (23) pouvant être entraîné par l'élément d'entraînement (31), relié auxdits moyens de support et de déplacement (15) et configuré pour positionner ladite unité d'enregistrement optique (17) entre une position avant, dans laquelle ladite unité d'enregistrement optique (17) est située au-dessus dudit élément de travail (14), et au moins une position latérale, dans laquelle ladite unité d'enregistrement optique (17) est située latéralement par rapport à la position dudit élément de travail (14).

3. Dispositif de surveillance selon la revendication 2, **caractérisé en ce que** ledit bras mobile (23) est relié en rotation à une tige de support (16) et est configuré pour être mis en rotation autour d'un axe de rotation (X) aligné avec un axe longitudinal dudit élément de travail (14), ou parallèle à celui-ci, ladite tige de support (16) étant comprise dans lesdits moyens de support et de déplacement (15).

4. Dispositif de surveillance selon la revendication 2 ou 3, **caractérisé en ce que** ledit bras mobile (23) a une longueur variable.

5. Dispositif de surveillance selon l'une quelconque des revendications 2 à 4, **caractérisé en ce qu'**une extrémité dudit bras mobile (23) reliée à ladite unité d'enregistrement optique (17) comprend un joint tournant (24) configuré pour modifier l'orientation dudit unité d'enregistrement optique (17) par rapport audit bras mobile (23).

6. Dispositif de surveillance selon l'une quelconque des revendications précédentes, **caractérisé en ce que** ledit élément de positionnement (21) comprend une unité de déplacement latéral conçue pour déplacer ladite unité d'enregistrement optique (17) le long d'un trajet défini par un guide (22) prévu sur lesdits moyens de support et de déplacement (15).

7. Dispositif de surveillance selon l'une quelconque des revendications précédentes, **caractérisé en ce qu'**il comprend deux unités d'enregistrement optique (17) coopérant l'une avec l'autre pour définir une image tridimensionnelle de ladite zone d'exploitation (12) commune auxdites deux unités d'enregistrement optique (17).

8. Dispositif de surveillance selon l'une quelconque des revendications précédentes, **caractérisé en ce que** ladite unité d'enregistrement optique (17) comprend au moins un capteur infrarouge apte à acquérir lesdites images même en l'absence de lumière, ou dans des conditions de faible visibilité.

9. Dispositif de surveillance selon l'une quelconque des revendications précédentes, **caractérisé en ce que** ladite unité d'enregistrement optique (17) comprend ou est associée à une unité de détection (26) conçue pour détecter la position et/ou l'orientation dans l'espace de ladite unité d'enregistrement optique (17) et communiquer avec ladite unité de gestion (18).

10. Procédé de surveillance d'une zone d'exploitation (12) d'une machine d'exploitation (11) pourvue d'un élément de travail (14), qui prévoit :
- d'acquérir des images de ladite zone d'exploitation (12) avec au moins une unité d'enregistrement optique (17),
- de traiter lesdites images pour identifier la présence éventuelle d'éventuels obstacles fixes et/ou mobiles dans ladite zone d'exploitation (12) au moyen d'une unité de gestion (18), et pour donner une instruction audit élément de travail (14) s'il y a un obstacle détecté dans ladite zone d'exploitation (12), et
**caractérisé en ce qu'**il prévoit également d'activer sélectivement un élément de positionnement (21) apte à positionner ladite unité d'enregistrement optique (17) au moyen d'une instruction de l'unité de gestion (18) et à déplacer ledit élément de positionnement (21) au moyen d'éléments d'entraînement (31) pouvant être entraînés par ladite unité de gestion (18) pour modifier la position de ladite unité d'enregistrement optique (17) par rapport à la position dudit élément de travail (14) et à la présence éventuelle d'un ou plusieurs obstacles fixes et/ou mobiles identifié(s) dans ladite zone d'exploitation (12), de manière à optimiser l'affichage de ladite zone d'exploitation (12) surveillée.

11. Procédé de surveillance selon la revendication 10, **caractérisé en ce qu'**il prévoit de déplacer ledit élément de positionnement (21) automatiquement, en fonction d'instructions fournies par ladite unité de gestion (18) sur la base du traitement desdites images acquises.

12. Procédé de surveillance selon la revendication 11, **caractérisé en ce qu'**il prévoit de déplacer ledit élément de positionnement (21) en fonction d'instructions fournies par un opérateur au moyen d'une interface utilisateur (28) reliée fonctionnellement à ladite unité de gestion (18).
